# EUROPEAN PATENT SPECIFICATION

(11) **EP 3 786 676 B1**
(45) Date of publication and mention of the grant of the patent: **08.04.2026**
(21) Application number: 19193830.7
(22) Date of filing: 27.08.2019
(51) Int. Cl.: G02B 6/38, G02B 6/44

(54) **MULTI-FIBER CONNECTOR FOR TELECOMMUNICATION ENCLOSURES**
MEHRFASERVERBINDER FÜR TELEKOMMUNIKATIONSGEHÄUSE
CONNECTEUR MULTI-FIBRE POUR BOÎTIERS DE TÉLÉCOMMUNICATION

(43) Date of publication of application: 03.03.2021
(73) Proprietor: Corning Research & Development Corporation, Corning, New York 14831 (US)
(72) Inventor: Lallena González, Susana, 28047 Madrid (ES); Estrada Ruiz, Jesus, 28033 Madrid (ES); Frutos Fernández, Enrique, 28033 Madrid (ES)
(74) Representative: Reddie & Grose LLP

(56) References cited:
- WO-A1-2013/106183
- US-A1- 2003 165 302
- US-A1- 2019 170 961

## Description

### Technical Field

The disclosure relates to an optical multi-fiber connector to be received in a port structure of a telecommunication enclosure. Specifically, the optical multi-fiber connector can be plugged into a port of the telecommunication enclosure.

### Background

Telecommunication cables are ubiquitous and used for distributing all manner of data across vast networks. The majority of cables are electrically conductive cables (typically copper), although the use of optical fiber cables is also growing rapidly in telecommunication systems as increasingly larger amounts of data are transmitted. Additionally, as data transmissions increase, the fiber optic network is being extended closer to the end user, which can be a premises, business or a private residence.

As telecommunication cables are routed across data networks, it is necessary to periodically open the cable so that one or more telecommunication lines may be spliced, thereby allowing data to be distributed to other cables or "branches" of the telecommunication network. At each point where a telecommunication cable is opened, it is necessary to provide a telecommunication enclosure to protect the exposed interior of the cable. The cable branches may be further distributed until the network reaches individual homes, businesses, offices and so on. These networks are often referred to as fiber to the X (FTTX) networks which can include fiber to the premises (FTTP), fiber to the home (FTTH) and fiber to the antenna (FTTA) networks.

In a FTTH network, optical fiber is brought to the end user and connected to an optical network terminal (ONT) unit mounted on a wall at the end user. The ONT converts an optical signal into conventional electrical signals to provide voice (telephone), internet (data) and video signals to the end user.

In some countries, FTTH deployment needs more than one fiber to the end user. In these cases, single fiber optic connectors like SC connectors cannot be used and multi-fiber connectors are needed instead. MPO connectors, for example, allow multi-fiber connectivity.

Ruggedized optical connectors attached to the terminal ends of a multi-fiber optic cable are gaining popularity for quick, reliable field service connections. FTTH deployment has adopted ruggedized external connectivity as the de facto standard.

There is a desire to provide an optical multi-fiber connector for telecommunication enclosures to make a multi-fiber connection in an outdoor environment allowing an easy, fast and ruggedized fiber optic connection.

US patent application US 2003/165302 describes a connector for coupling optic fibers. The connector has a mating end for mating to another connector and a cable end for connection to a fiber optic cable having a jacket. The connector comprises a mating end outer shell, a ferrule, a cable end outer shell, and a coupling sleeve. The mating end outer shell has a cavity for receiving an optic fiber of the cable, the cavity defining an axis through the connector. The ferrule is disposed in the cavity of the mating end outer shell. The cable end outer shell has a body portion and an extension member and is coupled to the mating end outer shell. The coupling sleeve is slidably mounted to the mating end outer shell. The coupling sleeve comprising a first piece and a second piece mechanically coupled together.

PCT application WO 2013/106183 Al discloses an optical fiber connector for inserting a telecommunication cable into a telecommunication enclosure in order to make an optical connection when the connector is inserted into a port structure of a telecommunication enclosure.

### Summary

The invention is defined in claim 1. Embodiments may allow an easy, fast and still reliable ruggedized fiber optic connection.

According to an embodiment of an optical multi-fiber connector to be received in a port structure of a telecommunication enclosure, the optical multi-fiber connector comprises a main body having an interior passageway extending from a first end to a second end of the main body. The interior passageway is configured to receive a multi-fiber optic cable. The optical multi-fiber connector comprises a ferrule assembly terminating the multi-fiber optic cable. The ferrule assembly protrudes from the first end of the main body. Furthermore, the optical multi-fiber connector comprises a port adaptor to be received in a port structure of the telecommunication enclosure. The port adaptor comprises a cavity to receive at least a portion of the main body. The optical multi-fiber connector further comprises an MPO shell fixed to the port adaptor. The ferrule assembly protrudes from the MPO shell. The optical multi-fiber connector further comprises a housing extension having an internal threaded portion. The main body has an external threaded portion located between a gripping surface on an external surface of the main body and the second end of the main body. The external threaded portion of the main body is configured to cooperate with the internal threaded portion of the housing extension.

The optical multi-fiber connector provides a multi-fiber connection, for example, a connection having from 2 to 24 fibers, in an outdoor environment without opening the telecommunication enclosure, and, additionally, provides an easy, fast and reliable ruggedized fiber optic connection.

Additional features and advantages are set forth in the detailed description that follows and in part will be readily apparent to those skilled in the art from the description or recognized by practising the embodiments as described in the written description and claims hereof, as well as the appended drawings.

### Brief Description of the Drawings

The accompanying drawings are included to provide further understanding, and are incorporated in and constitute a part of the specification. The drawings illustrate one or more embodiments, and together with the detailed description serve to explain principles and operation of the various embodiments. As such, the disclosure will become more fully understood from the following detailed description, taken in conjunction with the accompanying figures in which
Figure 1 shows a perspective view of various components of an optical multi-fiber connector for telecommunication enclosures;
Figure 2 shows a perspective view of a port adaptor and an MPO shell fixed to the port adaptor of the optical multi-fiber connector;
Figure 3 shows a perspective view of a main body of an optical multi-fiber connector with an MPO body and a spring guiding component fixed to the main body of the optical multi-fiber connector;
Figure 4 shows a perspective view of a spring guiding component, a spring and a ferrule assembly coupled to a multi-fiber optic cable;
Figure 5 shows a perspective view of an assembly of an optical multi-fiber connector comprising a main body inserted in a port adaptor to which an MPO shell is fixed; and
Figure 6 shows a perspective view of an assembled embodiment of an optical multi-fiber connector to be received in a port structure of a telecommunication enclosure.

### Detailed Description

Reference is now made in detail to various embodiments of an optical multi-fiber connector for telecommunication enclosures, examples of which are partly illustrated in the accompanying drawings. Whenever possible, the same or like reference numbers and symbols are used throughout the drawings to refer to the same or like parts. The drawings are not necessary to scale, and serve to illustrate the key aspects of the disclosure. The claims as set forth below are incorporated into and constitute part of this detailed description.

Exemplary embodiments herein provide an optical multi-fiber connector for use in telecommunication enclosures. The exemplary optical multi-fiber connector can be plugged into a port structure of a telecommunication enclosure. Particular advantages of the design of the present optical multi-fiber connector include the possibility of making a multi-fiber connection in an outdoor environment without opening the telecommunication enclosure. In addition, the exemplary optical multi-fiber connector can be easy to handle and fast to install, and provides a reliable ruggedized fiber optic connection.

The exemplary optical multi-fiber connector may be fitted to a terminal end of an optical multi-fiber cable and inserted into a port of a telecommunication enclosure to provide an optical connection interface within the communication enclosure. Depending on the communication network architecture, the telecommunication enclosure may be a buried enclosure, an aerial enclosure or terminal, a fiber distribution hub or an optical network terminal in the outside plant or a wall mount communication box, a fiber distribution hub, a wall mount patch panel, or an optical network terminal in premises applications.

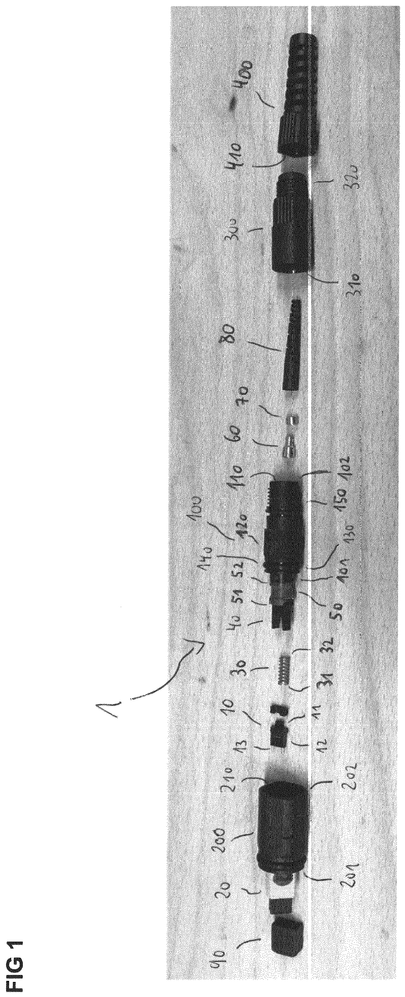

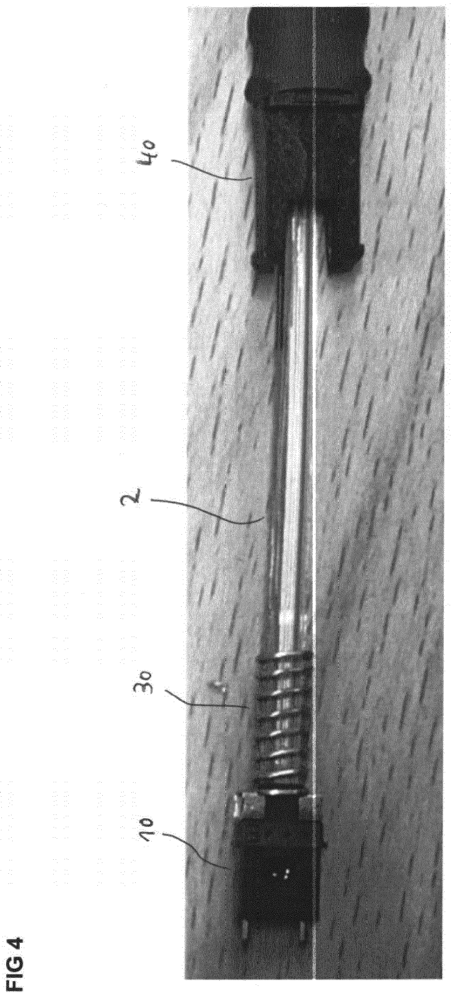

Figure 1 shows an embodiment of an optical multi-fiber connector 1 in a disassembled state and thus shows the different parts of the optical multi-fiber connector. The optical multi-fiber connector comprises a main body 100 having an interior passageway 110 extending from a first end 101 to a second end 102 of the main body 100. The interior passageway 110 is configured to receive a multi-fiber optic cable, not shown in Figure 1. The optical multi-fiber connector further comprises a ferrule assembly 10 terminating the multi-fiber optic cable. The ferrule assembly 10 that terminates a multi-fiber optic cable is shown, for example, in Figure 4.

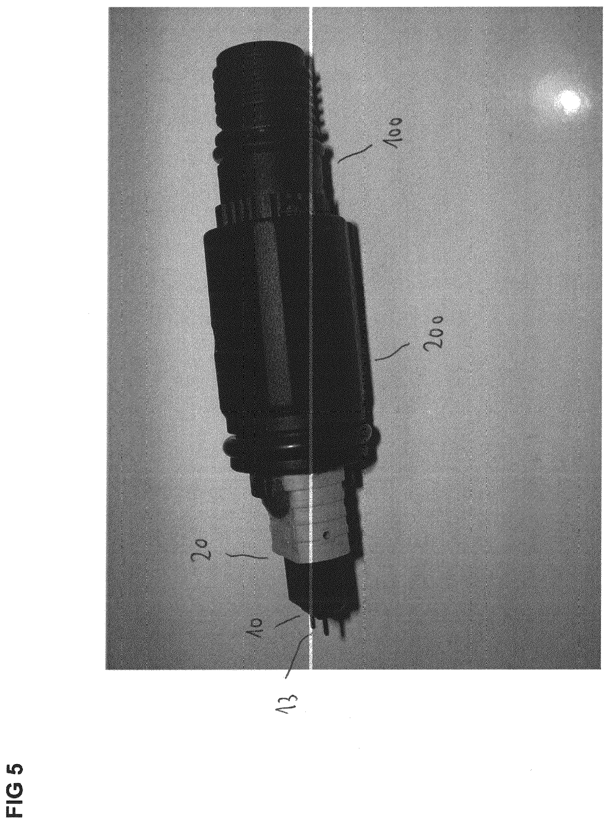

The optical multi-fiber connector 1 further comprises a port adaptor 200 to be received in a port structure of a telecommunication enclosure. The port adaptor 200 comprises a cavity 210 to receive at least a portion of the main body 100. Figure 5 shows an assembled state of the optical multi-fiber connector, where a front portion of the main body 100 is inserted in the cavity 210 of the port adaptor 200.

The optical multi-fiber connector 1 further comprises an MPO shell 20. The MPO shell 20 is fixed to the port adaptor 200. In the assembled state of the optical multi-fiber connector, the ferrule assembly 10 protrudes from the MPO shell 20, as shown for example in Figure 5. The optical multi-fiber connector 1 may comprise a dust cap 90 to protect the front of the ferrule assembly 10.

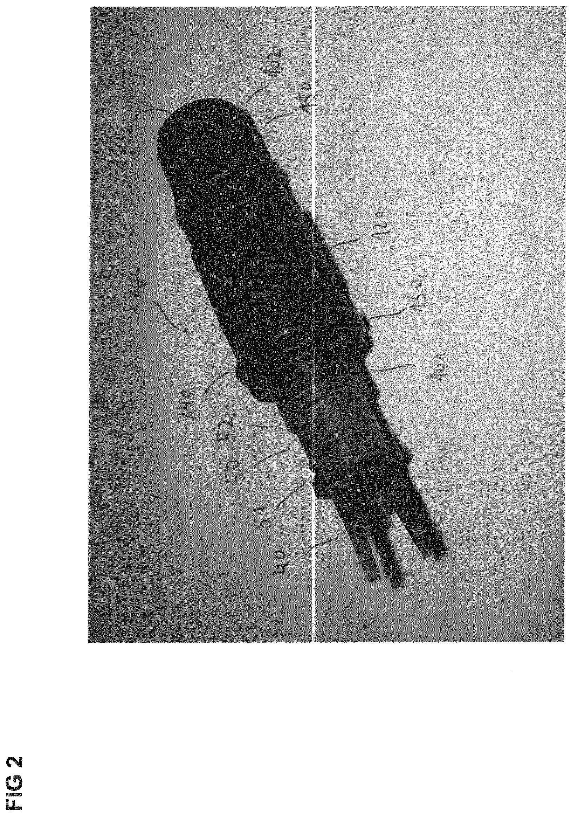

Referring to Figures 1 and 2, the port adaptor 200 has a first end 201 and a second end 202. As illustrated in Figure 5, a front portion of the main body 100 is received in the cavity 210 of the port adaptor 200 at the second end 202 of the port adaptor. The MPO shell 20 is fixed to the port adaptor 200 at the first end 201 of the port adaptor. According to a possible embodiment, the MPO shell 20 may be glued to the first end 201 of the port adaptor 200.

The ferrule assembly 10 may comprise a ferrule 11 and a boot 12 to receive the ferrule 11. The ferrule 11 is configured to receive a plurality of optical fibers of the multi-fiber optic cable. The ferrule assembly 10 further comprises alignment pins 13 protruding from the boot 12 of the ferrule assembly 10 to align a connection between the optical multi-fiber connector 1 with a mating connector. The ferrule assembly 10 terminating a multi-fiber optic cable 1 is shown in Figure 4.

The optical multi-fiber connector 1 comprises a spring 30 being arranged between the ferrule assembly 10 and the first end 101 of the main body 100. In the assembled state of the optical multi-fiber connector, the spring 30 is arranged to surround the multi-fiber optic cable 2, as shown in Figure 4. The main body 100 is configured to exert a force to compress the spring 30 when the main body 100 is pushed into the interior of the cavity 210 of the port adaptor 200 or, in other words, the spring 30 is configured to exert a restoring force on the main body 100, when the main body 100 is pushed into the interior of the cavity 210 of the port adaptor 200.

The optical multi-fiber connector 1 further comprises a spring guiding component 40 to receive a second end 32 of the spring 30. A first end 31 of the spring 30 is in contact with the ferrule assembly 10.

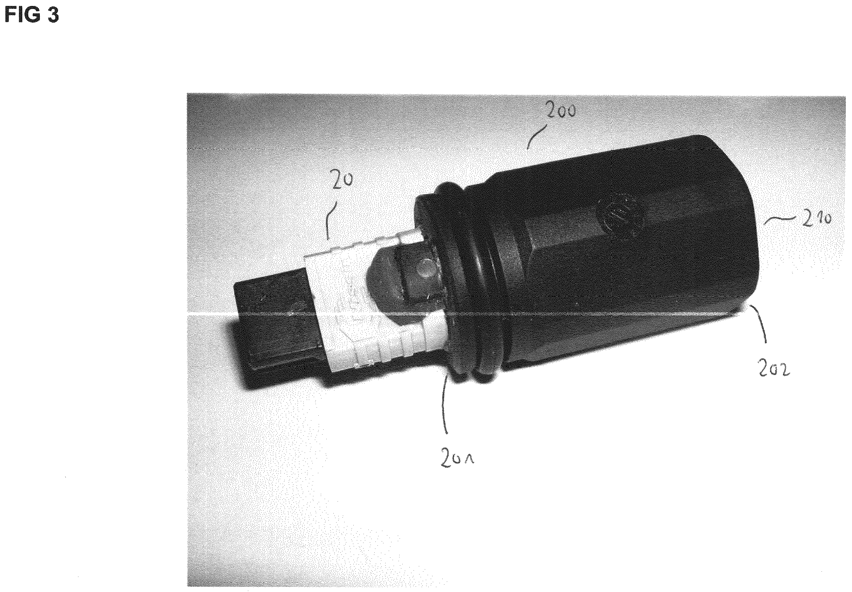

As illustrated in Figure 1 and Figure 3, the optical multi-fiber connector 1 comprises an MPO body 50 having a first end 51 and a second end 52. The spring guiding component 40 is fixed to the first end 51 of the MPO body 50. The second end 52 of the MPO body 50 is fixed to the first end 101 of the main body 100. The MPO body 50 comprises a channel to receive the multi-fiber optic cable.

As further illustrated in Figure 3, the main body 100 has a gripping surface 120 on an external surface of the main body and a groove 130 located between the gripping surface 120 and the first end 101 of the main body. The groove 130 is configured to receive a sealing member 140, for example an O-ring, which provides a sealing between the main body 100 and the port adaptor 200, when the front portion of the main body 100 is inserted in the port adaptor 200, as shown, for example in Figure 5.

Referring to Figure 1, the optical multi-fiber connector 1 comprises a housing extension 300 having an internal threaded portion 310 in a front portion of a cavity of the housing extension 300. The main body 100 has an external threaded portion 150 located between the gripping surface 120 and the second end 102 of the main body 100. The external threaded portion 150 is configured to cooperate with the internal threaded portion 310 of the housing extension 300.

The optical multi-fiber connector 1 may further comprise a bend control boot 400. The housing extension 300 is located between the main body 100 and the bend control boot 400. The bend control boot 400 may have an internal threaded portion 410. The housing extension 300 may have an external threaded portion 320. The internal threaded portion 410 of the bend control boot 400 cooperates with the external threaded portion 310 of the bend control boot 400 to fix the bend control boot 400 to the housing extension 300.

As illustrated in Figure 1, the optical multi-fiber connector may comprise a crimp eyelet 60 and a ring 70 for fixing strength members of the multi-fiber optic cable. Furthermore, a bend control boot 80 may be arranged around the multi-fiber optic cable. In the assembled state of the optical multi-fiber connector, the crimp eyelet 60, the ring 70 and the bend control boot 80 are arranged in the cavity 110 of the main body 100 or the cavity 310 of the housing extension 300.

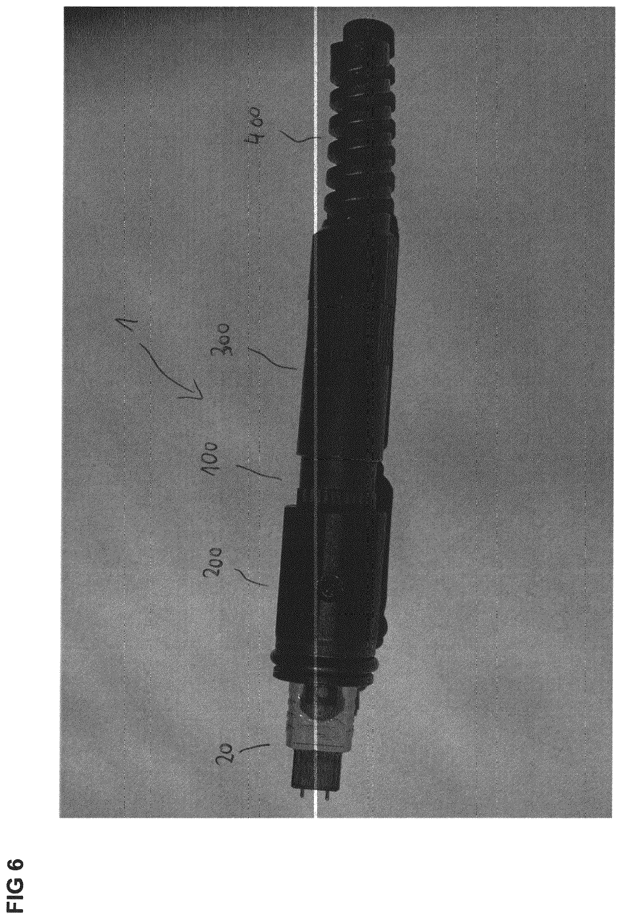

Figure 6 shows the optical multi-fiber connector 1 in an assembled state. The main body 100 is movably arranged inside the cavity 210 of the port adaptor 200 to slide inside the port adaptor. Furthermore, the ferrule assembly 10 is movably arranged inside the MPO shell 20. When a force is exerted on the multi-fiber optic cable to push the main body 100 in the cavity 210 of the port adaptor 200, the spring 30 will be compressed and exerts a restoring force to the main body 100.

In particular, the MPO shell and its functionality is added to a port adaptor, for example an ECAM Connect S9 converter available from 3M company, and the MPO body is added to the main body, for example a ECAM Connect S7 available from 3M company (removing the SC shell part from the nose). In this way, an MPO push-pull mechanism is fixed to the port adaptor 200, for example an ECAM Connect S9 converter, that moves freely over the main body 100 being inserted in the cavity 210 of the port adaptor. The main body 100, which may be an ECAM Connect S7 part available from the 3M company, that accommodates the MPO body slides inside the port adaptor 200 maintaining the MPO functionality in terms of connection and disconnection. The assembly of the optical multi-fiber connector 1 may be done at a manufacturing plant.

The exemplary optical multi-fiber connector 1 may be fitted to the terminal end of a communication cable and inserted into a port in a telecommunication enclosure to provide an optical connection interface within the telecommunication enclosure. The port adaptor 200 is used to configure the size and shape of a port structure of a telecommunication enclosure to adapt the size and shape of the port structure so that it can accommodate optical multi-fiber connector 1. Inside the enclosure and at a fixed length from an end plate, an MPO coupling plate has to be placed in order to include the MPO couplings to be connected internally to an MPO connector and externally to the optical multi-fiber connector 1.

### List of Reference Signs

- 1: optical multi-fiber connector
- 2: multi-fiber optic cable
- 10: ferrule assembly
- 11: ferrule
- 12: boot
- 13: alignment pins
- 20: MPO shell
- 30: spring
- 40: spring guiding component
- 50: MPO body
- 60: crimp eyelet
- 70: ring
- 80: bend control boot
- 90: dust cap
- 100: main body
- 110: interior passageway
- 120: gripping surface
- 130: groove
- 140: sealing member
- 150: external threaded portion
- 200: port adaptor
- 210: cavity
- 300: housing extension
- 310: cavity of housing extension
- 400: bend control boot
- 410: internal threaded portion of bend control boot

## Claims

1. An optical multi-fiber connector to be received in a port structure of a telecommunication enclosure, the connector comprising:
- a main body (100) having an interior passageway (110) extending from a first end (101) to a second end (102) of the main body, the interior passageway (110) being configured to receive a multi-fiber optic cable,
- a ferrule assembly (10) terminating the multi-fiber optic cable,
- a port adaptor (200) to be received in the port structure of the telecommunication enclosure, the port adaptor (200) comprising a cavity (210) to receive at least a portion of the main body (100), and
- an MPO shell (20) fixed to the port adaptor (200), wherein the ferrule assembly (10) protrudes from the MPO shell (20), and
- a housing extension (300);
**characterised in that**
the housing extension (300) has an internal threaded portion (310), wherein the main body (100) has an external threaded portion (150) located between a gripping surface (120) on an external surface of the main body and the second end (102) of the main body (100), the external threaded portion (150) being configured to cooperate with the internal threaded portion (310) of the housing extension (300).

2. The optical multi-fiber connector of claim 1,
wherein the port adaptor (200) has a first end (201) and a second end (202), wherein the portion of the main body (100) is received in the cavity (210) of the port adaptor (200) at the second end (202) of the port adaptor and wherein the MPO shell (20) is fixed to the port adaptor (200) at the first end (201) of the port adaptor (200).

3. The optical multi-fiber connector of claim 1 or 2,
wherein the MPO shell (20) is glued to the first end (201) of the port adaptor (200).

4. The optical multi-fiber connector of any of the claims 1 to 3,
wherein the main body (100) is movably arranged inside the cavity (210) of the port adaptor (200) to slide inside the port adaptor.

5. The optical multi-fiber connector of any of the claims 1 to 4,
wherein the ferrule assembly (10) is movably arranged inside the MPO shell (20).

6. The optical multi-fiber connector of any of the claims 1 to 5,
- wherein the ferrule assembly (10) comprises a ferrule (11) and a boot (12) to receive the ferrule (11), wherein the ferrule (11) is configured to receive a plurality of optical fibers of the multi-fiber optic cable,
- wherein the ferrule assembly (10) comprises alignment pins (13) protruding from the boot (12) of the ferrule assembly (10).

7. The optical multi-fiber connector of any of the claims 1 to 6, comprising:
- a spring (30) being arranged between the ferrule assembly (10) and the first end (101) of the main body (100), the spring (30) being arranged to surround the multi-fiber optic cable,
- wherein the main body (100) is configured to exert a force to compress the spring (30) when the main body (100) is pushed into the interior of the cavity (210) of the port adaptor (200).

8. The optical multi-fiber connector of any of the claims 1 to 7,
wherein the spring (30) is configured to exert a restoring force on the main body (100), when the main body (100) is pushed into the interior of the cavity (210) of the port adaptor (200).

9. The optical multi-fiber connector of claim 7 or 8, comprising:
a spring guiding component (40) to receive a first end (31) of the spring (30), wherein a second end (32) of the spring (30) is in contact with the ferrule assembly (10).

10. The optical multi-fiber connector of claim 9, comprising:
- an MPO body (50) having a first end (51) and a second end (52),
- wherein the spring guiding component (40) is fixed to the first end (51) of the MPO body (50),
- wherein the second end (52) of the MPO body (50) is fixed to the first end (101) of the main body (100).

11. The optical multi-fiber connector of 10,
wherein the MPO body (50) comprises a channel to receive the multi-fiber optic cable.

12. The optical multi-fiber connector of any of the claims 1 to 11, wherein the main body (100) has a groove (130) located between the gripping surface (120) and the first end (101) of the main body, the groove (130) being configured to receive a sealing member (140).

13. The optical multi-fiber connector of claim 12, comprising:
- a bend control boot (400),
- wherein the housing extension (300) is located between the main body (100) and the bend control boot (400).

14. The optical multi-fiber connector of claim 13,
wherein the bend control boot (400) has an internal threaded portion (410) and the housing extension (300) has an external threaded portion (320), wherein the internal threaded portion (410) of the bend control boot (400) cooperates with the external threaded portion (320) of the bend control boot (400) to fix the bend control boot (400) to the housing extension (300).

## Patentansprüche

1. Optischer Mehrfaserverbinder, der in einer Anschlussstruktur eines Telekommunikationsgehäuses aufzunehmen ist, wobei der Verbinder Folgendes aufweist:
- einen Hauptkörper (100) mit einem inneren Durchgang (110), der sich von einem ersten Ende (101) zu einem zweiten Ende (102) des Hauptkörpers erstreckt, wobei der innere Durchgang (110) zum Aufnehmen eines optischen Mehrfaserkabels konfiguriert ist,
- eine Ferrulenanordnung (10), die das optische Mehrfaserkabel abschließt,
- einen Anschlussadapter (200), der in der Anschlussstruktur des Telekommunikationsgehäuses aufzunehmen ist, wobei der Anschlussadapter (200) einen Hohlraum (210) zum Aufnehmen von mindestens einem Teil des Hauptkörpers (100) aufweist, und
- eine MPO-Hülse (20), die an dem Anschlussadapter (200) befestigt ist, wobei die Ferrulenanordnung (10) aus der MPO-Hülse (20) vorsteht, und
- eine Gehäuseverlängerung (300);
**dadurch gekennzeichnet, dass**
die Gehäuseverlängerung (300) einen Innengewindeteil (310) hat, wobei der Hauptkörper (100) einen Außengewindeteil (150) hat, der zwischen einer Grifffläche (120) an einer Außenfläche des Hauptkörpers und dem zweiten Ende (102) des Hauptkörpers (100) liegt, wobei der Außengewindeteil (150) zum Zusammenwirken mit dem Innengewindeteil (310) der Gehäuseverlängerung (300) konfiguriert ist.

2. Optischer Mehrfaserverbinder nach Anspruch 1,
wobei der Anschlussadapter (200) ein erstes Ende (201) und ein zweites Ende (202) hat, wobei der Teil des Hauptkörpers (100) im Hohlraum (210) des Anschlussadapters (200) am zweiten Ende (202) des Anschlussadapters aufgenommen wird und wobei die MPO-Hülse (20) am Anschlussadapter (200) am ersten Ende (201) des Anschlussadapters (200) befestigt ist.

3. Optischer Mehrfaserverbinder nach Anspruch 1 oder 2,
wobei die MPO-Hülse (20) an das erste Ende (201) des Anschlussadapters (200) angeklebt ist.

4. Optischer Mehrfaserverbinder nach einem der Ansprüche 1 bis 3,
wobei der Hauptkörper (100) bewegbar in dem Hohlraum (210) des Anschlussadapters (200) angeordnet ist, um in dem Anschlussadapter zu gleiten.

5. Optischer Mehrfaserverbinder nach einem der Ansprüche 1 bis 4,
wobei die Ferrulenanordnung (10) im Inneren der MPO-Hülse (20) bewegbar angeordnet ist.

6. Optischer Mehrfaserverbinder nach einem der Ansprüche 1 bis 5,
- wobei die Ferrulenanordnung (10) eine Ferrule (11) und eine Manschette (12) zum Aufnehmen der Ferrule (11) aufweist, wobei die Ferrule (11) zum Aufnehmen einer Mehrzahl von optischen Fasern des optischen Mehrfaserkabels konfiguriert ist,
- wobei die Ferrulenanordnung (10) Ausrichtungsstifte (13) aufweist, die aus der Manschette (12) der Ferrulenanordnung (10) ragen.

7. Optischer Mehrfaserverbinder nach einem der Ansprüche 1 bis 6, der Folgendes aufweist:
- eine Feder (30), die zwischen der Ferrulenanordnung (10) und dem ersten Ende (101) des Hauptkörpers (100) angeordnet ist, wobei die Feder (30) um das optische Mehrfaserkabel angeordnet ist,
- wobei der Hauptkörper (100) zum Ausüben einer Kraft zum Zusammendrücken der Feder (30), wenn der Hauptkörper (100) in das Innere des Hohlraums (210) des Anschlussadapters (200) geschoben wird, konfiguriert ist.

8. Optischer Mehrfaserverbinder nach einem der Ansprüche 1 bis 7,
wobei die Feder (30) zum Ausüben einer Rückstellkraft auf den Hauptkörper (100), wenn der Hauptkörper (100) in das Innere des Hohlraums (210) des Anschlussadapters (200) geschoben wird, konfiguriert ist.

9. Optischer Mehrfaserverbinder nach Anspruch 7 oder 8, der Folgendes aufweist:
einen Federführungsteil (40) zum Aufnehmen eines ersten Endes (31) der Feder (30), wobei ein zweites Ende (32) der Feder (30) mit der Ferrulenanordnung (10) in Kontakt ist.

10. Optischer Mehrfaserverbinder nach Anspruch 9, der Folgendes aufweist:
- einen MPO-Körper (50) mit einem ersten Ende (51) und einem zweiten Ende (52),
- wobei der Federführungsteil (40) am ersten Ende (51) des MPO-Körpers (50) befestigt ist,
- wobei das zweite Ende (52) des MPO-Körpers (50) am ersten Ende (101) des Hauptkörpers (100) befestigt ist.

11. Optischer Mehrfaserverbinder nach Anspruch 10,
wobei der MPO-Körper (50) einen Kanal zum Aufnehmen des optischen Mehrfaserkabels aufweist.

12. Optischer Mehrfaserverbinder nach einem der Ansprüche 1 bis 11,
wobei der Hauptkörper (100) eine Nut hat, die zwischen der Grifffläche (120) und dem ersten Ende (101) des Hauptkörpers liegt, wobei die Nut (130) zum Aufnehmen eines Dichtelements (140) konfiguriert ist.

13. Optischer Mehrfaserverbinder nach Anspruch 12, der Folgendes aufweist:
- eine Biegeschutzmanschette (400),
- wobei die Gehäuseverlängerung (300) zwischen dem Hauptkörper (100) und der Biegeschutzmanschette (400) liegt.

14. Optischer Mehrfaserverbinder nach Anspruch 13,
wobei die Biegeschutzmanschette (400) einen Innengewindeteil (410) hat und die Gehäuseverlängerung (300) einen Außengewindeteil (320) hat, wobei der Innengewindeteil (410) der Biegeschutzmanschette (400) mit dem Außengewindeteil (320) der Biegeschutzmanschette (400) zum Befestigen der Biegeschutzmanschette (400) an der Gehäuseverlängerung (300) zusammenwirkt.

## Revendications

1. Connecteur de fibres optiques multiples devant être reçu dans une structure de port d'une enceinte de télécommunication, le connecteur comprenant :
- un corps principal (100) ayant un passage intérieur (110) s'étendant d'une première extrémité (101) à une deuxième extrémité (102) du corps principal, le passage intérieur (110) étant configuré pour recevoir un câble à fibres optiques multiples,
- un ensemble de ferrule (10) terminant le câble à fibres optiques multiples,
- un adaptateur de port (200) devant être reçu dans la structure de port de l'enceinte de télécommunication, l'adaptateur de port (200) comprenant une cavité (210) pour recevoir au moins une partie du corps principal (100), et
- une coque MPO (20) fixée à l'adaptateur de port (200), dans lequel l'ensemble de ferrule (10) fait saillie de la coque MPO (20), et
- une extension de boîtier (300) ;
**caractérisé en ce que** l'extension de boîtier (300) a une partie interne filetée (310), dans lequel le corps principal (100) a une partie externe filetée (150) située entre une surface de préhension (120) sur une surface externe du corps principal et la deuxième extrémité (102) du corps principal (100), la partie externe filetée (150) étant configurée pour coopérer avec la partie interne filetée (310) de l'extension de boîtier (300).

2. Connecteur de fibres optiques multiples selon la revendication 1,
dans lequel l'adaptateur de port (200) a une première extrémité (201) et une deuxième extrémité (202), dans lequel la partie du corps principal (100) est reçue dans la cavité (210) de l'adaptateur de port (200) à la deuxième extrémité (202) de l'adaptateur de port et dans lequel la coque MPO (20) est fixée à l'adaptateur de port (200) à la première extrémité (201) de l'adaptateur de port (200).

3. Connecteur de fibres optiques multiples selon la revendication 1 ou 2,
dans lequel la coque MPO (20) est collée à la première extrémité (201) de l'adaptateur de port (200).

4. Connecteur de fibres optiques multiples selon l'une quelconque des revendications 1 à 3,
dans lequel le corps principal (100) est disposé de manière amovible à l'intérieur de la cavité (210) de l'adaptateur de port (200) pour glisser à l'intérieur de l'adaptateur de port.

5. Connecteur de fibres optiques multiples selon l'une quelconque des revendications 1 à 4,
dans lequel l'ensemble de ferrule (10) est disposé de manière amovible à l'intérieur de la coque MPO (20).

6. Connecteur de fibres optiques multiples selon l'une quelconque des revendications 1 à 5,
- dans lequel l'ensemble de ferrule (10) comprend une ferrule (11) et une gaine (12) pour recevoir la ferrule (11), dans lequel la ferrule (11) est configurée pour recevoir une pluralité de fibres optiques du câble à fibres optiques multiples,
- dans lequel l'ensemble de ferrule (10) comprend des goupilles d'alignement (13) faisant saillie de la gaine (12) de l'ensemble de ferrule (10).

7. Connecteur de fibres optiques multiples selon l'une quelconque des revendications 1 à 6, comprenant :
- un ressort (30) étant disposé entre l'ensemble de ferrule (10) et la première extrémité (101) du corps principal (100), le ressort (30) étant disposé pour entourer le câbles à fibres optiques multiples,
- dans lequel le corps principal (100) est configuré pour exercer une force pour comprimer le ressort (30) lorsque le corps principal (100) est poussé dans l'intérieur de la cavité (210) de l'adaptateur de port (200).

8. Connecteur de fibres optiques multiples selon l'une quelconque des revendications 1 à 7,
dans lequel le ressort (30) est configuré pour exercer une force de rétablissement sur le corps principal (100),
dans lequel le corps principal (100) est poussé dans l'intérieur de la cavité (210) de l'adaptateur de port (200).

9. Connecteur de fibres optiques multiples selon la revendication 7 ou 8, comprenant :
un composant de guidage de ressort (40) pour recevoir une première extrémité (31) du ressort (30), dans lequel une deuxième extrémité (32) du ressort (30) est en contact avec l'ensemble de ferrule (10).

10. Connecteur de fibres optiques multiples selon la revendication 9, comprenant :
- un corps MPO (50) ayant une première extrémité (51) et une deuxième extrémité (52),
- dans lequel le composant de guidage de ressort (40) est fixé à la première extrémité (51) du corps MPO (50),
- dans lequel la deuxième extrémité (52) du corps MPO (50) est fixée à la première extrémité (101) du corps principal (100).

11. Connecteur de fibres optiques multiples selon la revendication 10,
dans lequel le corps MPO (50) comprend un canal pour recevoir le câble à fibres optiques multiples.

12. Connecteur de fibres optiques multiples selon l'une quelconque des revendications 1 à 11,
dans lequel le corps principal (100) a une rainure (130) située entre la surface de préhension (120) et la première extrémité (101) du corps principal, la rainure (130) étant configurée pour recevoir un membre d'étanchéité (140).

13. Connecteur de fibres optiques multiples selon la revendication 12, comprenant :
- une gaine de contrôle de flexion (400),
- dans lequel l'extension de boîtier (300) est située entre le corps principal (100) et la gaine de contrôle de flexion (400).

14. Connecteur de fibres optiques multiples selon la revendication 13,
dans lequel la gaine de contrôle de flexion (400) a une partie filetée interne (410) et l'extension de boîtier (300) a une partie filetée externe (320), dans lequel la partie filetée interne (410) de la gaine de contrôle de flexion (400) coopère avec la partie filetée externe (320) de la gaine de contrôle de flexion (400) pour fixer la gaine de contrôle de flexion (400) à l'extension de boîtier (300).
